# NEUE EUROPÄISCHE PATENTSCHRIFT

(11) **EP 3 129 668 B2**
(45) Veröffentlichungstag und Bekanntmachung des Hinweises auf die Entscheidung über den Einspruch: **05.01.2022**
(45) Hinweis auf die Patenterteilung: 24.10.2018
(21) Anmeldenummer: 15708713.1
(22) Anmeldetag: 30.01.2015
(51) Int. Cl.: F16C 19/50, F16C 41/04, F16C 19/46, F16C 33/46

(54) **SEGMENTLAGERANORDNUNG MIT FORMSCHLÜSSIG GESICHERTEM KUNSTSTOFFKÄFIG**
SEGMENT BEARING ARRANGEMENT WITH A PLASTIC CAGE WHICH IS SECURED IN A FORMFITTING MANNER
ENSEMBLE PALIER SEGMENTÉ AVEC CAGE EN MATIÈRE PLASTIQUE FIXÉE PAR COMPLÉMENTARITÉ DE FORMES

(30) Priorität: 09.04.2014 DE 102014206803
(43) Veröffentlichungstag der Anmeldung: 15.02.2017
(73) Patentinhaber: Schaeffler Technologies AG & Co. KG, 91074 Herzogenaurach (DE)
(72) Erfinder: LANG, Johannes, 91097 Oberreichenbach (DE); STARK, Alexander, 97500 Ebelsbach (DE); ANGER, Andre, 91486 Uehlfeld (DE)
(86) Internationale Anmeldenummer: PCT/DE2015/200054
(87) Internationale Veröffentlichungsnummer: WO 2015/154761

(56) Entgegenhaltungen:
- EP-A1- 2 159 436
- EP-A1- 2 312 173
- DE-A1- 10 030 268
- JP-A- 2003 206 933

## Beschreibung

Die Erfindung betrifft eine Segmentlageranordnung mit einem Kunststoffkäfig mit den Merkmalen des Anspruchs 1.

Wälzlager in der Ausbildung als Radiallager werden üblicherweise als 360-Grad-Lager ausgeführt, wobei sich zwei Lagerpartner gegenseitig in radialer Richtung abstützen. Es sind jedoch auch sogenannte Segmentlager bekannt, welche insbesondere als Schwenklager ausgebildet sind und welche sich nur über einen Winkelbereich kleiner als 360 Grad erstrecken.

Beispielsweise zeigt die Offenlegungsschrift DE 10 2005 034 739 A1 eine Lagerung eines schwenkbaren Hebels, wobei der Hebel relativ zu einer Umgebungskonstruktion über ein Segmentlager abgestützt ist. Das Segmentlager umfasst eine äußere und eine innere Lagerhalbschale zwischen denen Rollen in dem Käfig angeordnet sind. Die Lagerhalbschalen sind unverlierbar miteinander verbunden.

Die EP 2 159 436 A1 zeigt eine Segmentlageranordnung mit einer einzigen Lagerteilschale, wobei der Käfig vom radialen Herausfallen durch gebogenen Haltezungen in den Seitenborden der Lagerteilschale geschützt ist.

Die EP 2 896 851 A1 zeigt eine Scheibenbremse für ein Nutzfahrzeug, mit einer in einem Bremssattel positionierten Zuspanneinrichtung, die einen Bremshebel aufweist, der mittels mindestens eines kreisbogenförmigen Wälzlagers im Bremssattel schwenkbeweglich gelagert ist, wobei das Wälzlager eine Außenschale sowie eine Mehrzahl nebeneinander liegender, sich an der konkaven Innenseite der Außenschale abstützender Wälzrollen aufweist, die in einem Käfig gehalten sind, der gegenüber der Außenschale begrenzt verschwenkbar ist, wobei die Außenschale, die Wälzrollen und der Käfig als vormontierte Baueinheit in den Bremssattel eingesetzt sind, wobei der Käfig und die Außenschale formschlüssig miteinander verbunden sind und der Käfig an seinen gegenüberliegenden, gekrümmten Längskanten jeweils mindestens einen Fensterausschnitt aufweist, an den ein an der zugeordneten Kante der Außenschale vorgesehener Vorsprung eingreift oder der Käfig an seinen sich gegenüberliegenden gekrümmten Längskanten jeweils einen Vorsprung aufweist, der in einen Fensterausschnitt an der zugeordneten Kante der Außenschale eingreift, wobei der Vorsprung in Korrespondenz mit dem Fensterausschnitt den Schwenkweg des Käfigs begrenzt.

Die EP 2 312 173 A1 zeigt ein Paar Verbindungsteile, das in axialer Richtung durch Säulenteile verbunden ist, die zwischen den Taschen angeordnet sind und sich in axialer Richtung erstrecken. Der Säulenteil ist eher an der Innendurchmesserseite als an einem PKD (Teilkreisdurchmesser) der in der Tasche gehaltenen Rolle vorgesehen. Somit kann die Anzahl der Rollen, die von dem Halter gehalten werden können, erhöht werden. In diesem Fall kann die Belastbarkeit des Kipplagers, das einen solchen Halter enthält, erhöht werden. Zusätzlich halten die Laufbahnoberfläche und der Säulenteil nach dem Zusammenbau des Kipplagers die Rolle so, dass sie sandwichartig angeordnet sind, um die radiale Bewegung der Rolle einzuschränken.

Die DE 102 36 606 A1 zeigt eine Scheibenbremse mit einem Drehhebel, der einen exzenterartigen Ansatz aufweist, an dessen einer Seite eine halbkugelartige Ausnehmung für ein kugelartiges Lagerelement und an dessen gegenüberliegender Seite ein Rollenlager angeordnet ist, wobei in die Ausnehmung eine Lagerpfanne eingreift, in welche das kugelartige Lagerelement eingesetzt ist, wobei der Lagerpfanne wenigstens ein Käfigrückholer zugeordnet ist, welcher den Drehhebel umgreift und mit dem Rollenlager zusammenwirkt.

### Gebiet der Erfindung

Der Erfindung liegt die Aufgabe zugrunde, eine Segmentlageranordnung für eine Schwenklagerung vorzuschlagen, welche besonders vorteilhaft für eine Endmontage ausgebildet ist. Diese Aufgabe wird durch eine Segmentlageranordnung mit den Merkmalen des Anspruchs 1 gelöst. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Segmentlageranordnung vorgeschlagen, welche insbesondere als eine Radiallageranordnung ausgebildet ist. Die Segmentlageranordnung ermöglicht eine Relativverschwenkung von zwei Lagerpartnern um eine Schwenkachse als eine Hauptachse der Segmentlageranordnung. Die Segmentlageranordnung erstreckt sich um die Hauptachse um einen Winkelbereich kleiner als 360 Grad, insbesondere kleiner als 180 Grad.

Die Segmentlageranordnung weist einen Käfig sowie eine Mehrzahl von Rollen auf, wobei die Rollen in dem Käfig angeordnet sind. Bei einer bevorzugten Ausbildung der Erfindung sind die Rollen als Nadelrollen ausgebildet. Die Nadelrollen weisen in der bevorzugten Ausbildung ein Längen-zu-Durchmesser-Verhältnis auf, welches vorzugsweise größer als 4:1, vorzugsweise größer als 6:1 und insbesondere größer als 8:1 ausgebildet ist. Die Rollen, insbesondere Nadelrollen, sind ein- oder mehrreihig in dem Käfig angeordnet.

Die Segmentlageranordnung weist eine Lagerteilschale auf, welche eine Laufbahn für die Rollen umfasst. Im Betrieb wälzen die Rollen auf der Laufbahn der Lagerteilschale ab, so dass der rollengefüllte Käfig auf der Lagerteilschale um die Hauptachse in Umlaufrichtung um einen Schwenkwinkel schwenkbar angeordnet ist. Besonders bevorzugt erstreckt sich die Lagerteilschale in Umlaufrichtung um die Hauptachse über einen Winkelbereich, welcher kleiner als 360 Grad, insbesondere kleiner als 180 Grad, ausgebildet ist.

Im Rahmen der Erfindung wird vorgeschlagen, dass zum einen die Rollen in dem Käfig in Richtung der Hauptachse an dem Käfig formschlüssig gesichert sind. Mindestens in dem montierten Zustand von Käfig und Lagerteilschale sind die Rollen unverlierbar gefangen. Zudem ist der Käfig zumindest in einem Teilbereich des Schwenkwinkels gegen ein radiales Herausfallen in Richtung der Hauptachse, insbesondere in radialer Richtung weg von der Lagerteilschale, an der Lagerteilschale formschlüssig gesichert. Die Halteorgane werden als Verstemmungen in den Seitenborden der Lagerteilschale ausgebildet. Besonders bevorzugt ist der Käfig über mindestens 30 Prozent des Schwenkwinkels, vorzugsweise über mindestens 60 Prozent des Schwenkwinkels und insbesondere über mindestens 90 Prozent des Schwenkwinkels gegen ein Herausfallen in radialer Richtung formschlüssig gesichert. Dadurch, dass der Käfig an der Lagerteilschale formschlüssig gesichert ist, sind Käfig und Lagerteilschale in dem Teilbereich des Schwenkwinkels formschlüssig in radialer Richtung miteinander verbunden.

Der Erfindung liegt die Überlegung zugrunde, dass die Endmontage der Segmentlageranordnung auch dadurch erschwert wird, dass sowohl Rollen aus dem Käfig herausfallen können, als auch, dass der gesamte Käfig aus der Lagerteilschale herausfallen kann. Durch die Erfindung wird erreicht, dass die Segmentlageranordnung, umfassend den Käfig und die Lagerteilschale, als eine Vormontagebaugruppe, insbesondere eine selbsthaltende Vormontagebaugruppe, ausgebildet ist. Dabei wird sichergestellt, dass der Käfig nicht in radialer Richtung in Bezug auf die Hauptachse aus der Lagerteilschale herausfallen kann. Vorzugsweise kann der Käfig aus keiner Position entlang des Schwenkwinkels in radialer Richtung herausfallen, da er stets in radialer Richtung formschlüssig gesichert ist. Bei praktischen Umsetzungen hat sich jedoch herausgestellt, dass es ausreichend sein kann, dass der Käfig nur entlang eines Teilabschnitts des Schwenkwinkels, vorzugsweise einem Großteilabschnitts des Schwenkwinkels, gegen ein Herausfallen in radialer Richtung formschlüssig gesichert ist. Auch bei dieser Ausführungsform wird die Wahrscheinlichkeit eines Herausfallens deutlich verringert. Optional ergänzend kann in dieser Ausführungsform der Käfig in einer Position, in der dieser formschlüssig gegen ein Herausfallen gesichert ist, stoffschlüssig, z.B. über ein Klebefett, gesichert werden.

Neben der Sicherung gegen ein Herausfallen in radialer Richtung ist erfindungsgemäß vorgesehen, dass die Segmentlageranordnung Endanschlagseinrichtungen aufweist, wobei die Endanschlagseinrichtungen zur Sicherung gegen ein Herausfallen des Käfigs in Umlaufrichtung ausgebildet sind. Insbesondere kann der Käfig Endanschlagspunkte aufweisen, mit denen der Käfig an z.B. Verprägungen der Lagerteilschale anschlägt. Bei einer Weiterbildung der Erfindung ist bevorzugt vorgesehen, dass die Lagerteilschale Seitenborde aufweist, sodass auch ein Herausfallen des Käfigs in axialer Richtung in beide Richtungen formschlüssig verhindert ist.

Im Ergebnis ist es besonders bevorzugt, dass der Käfig über den gesamten Schwenkwinkel unverlierbar in dem Laufbahnträger angeordnet ist.

Es ist zudem besonders bevorzugt, dass die Rollen in dem Käfig unverlierbar, insbesondere selbsthaltend, angeordnet sind. Im Speziellen ist die Mehrzahl von Rollen in dem Käfig in allen Richtungen, insbesondere radial nach innen, radial nach außen und axial in beide Richtungen formschlüssig durch den Käfig gehalten. In dieser Ausgestaltung bildet der rollengefüllte Käfig eine Untermontagebaugruppe, wobei ein versehentliches Verlieren von Rollen bei der Montage zur Vormontagebaugruppe oder in der Endmontage ausgeschlossen ist.

Erfindungsgemäß ist der Käfig als ein Filigrankäfig ausgebildet. Bei einem Filigrankäfig ist für jede der Rollen eine Einzelaufnahme vorgesehen. Der Käfig weist somit bevorzugt eine Mehrzahl von Einzelaufnahmen auf, wobei in den Einzelaufnahmen jeweils eine einzige Rolle angeordnet ist. Der Käfig kann ein- oder mehrreihig ausgebildet sein, um eine oder mehrere Reihen von Rollen aufzunehmen. Besonders bevorzugt sind die Rollen in dem Käfig vollrollig - auch vollnadelig genannt - angeordnet. Bei einer vollrolligen Anordnung sind die Rollen in Umlaufrichtung um die Hauptachse vorzugsweise so eng aneinandergelegt, dass eine Maximalanzahl von Rollen in Umlaufrichtungen angeordnet werden kann. Insbesondere ist die Summe aller freien Abstände in Umlaufrichtung kleiner als der Durchmesser einer Rolle in Umlaufrichtung. Durch die vollrollige Anordnung wird bei zugleich bauraumsparender Konstruktion die größtmögliche radiale Tragfähigkeit der Segmentlageranordnung erreicht. Die Rollen weisen jeweils eine eigene Rotationsachse auf, wobei die Gesamtheit der Rotationsachsen einen Teilkreisdurchmesser der Rollen definiert. Insbesondere im Teilkreisdurchmesser sind die Rollen unmittelbar benachbart zueinander, insbesondere vollrollig, angeordnet.

Erfindungsgemäß ist der Käfig als ein Kunststoffkäfig ausgebildet.

Der Kunststoffkäfig kann zum einen mehrteilig ausgebildet sein und beispielsweise zwei Käfigteilschalen aufweisen, welche gemeinsam den Kunststoffkäfig bilden, wobei bei einer Bestückung des Kunststoffkäfigs die Käfigteilhälften zunächst getrennt sind, die Rollen eingelegt werden und nachfolgend die Käfigteilhälften miteinander verbunden werden, um die Rollen unverlierbar zu halten. Die Verbindung der Käfigteilhälften kann formschlüssig, stoffschlüssig und/oder kraftschlüssig erfolgen.

Bei einer alternativen Ausgestaltung kann der Kunststoffkäfig auch einteilig oder einstückig ausgebildet sein, wobei Stege oder andere Halteorgane in dem Kunststoffkäfig zur Bildung der Einzelaufnahmen und zum Sichern der Rollen in dem Kunststoffkäfig in radialer Richtung elastisch ausgebildet sind, sodass die Rollen in den Kunststoffkäfig eingedrückt werden können, wobei beim Eindrücken die Stege beziehungsweise Halteorgane elastisch verformt werden.

Erfindungsgemäß weist die Segmentlageranordnung eine Kopplungsstruktur auf, wobei die Kopplungsstruktur zur Sicherung des Kunststoffkäfigs gegen das Herausfallen aus der Lagerteilschale in radialer Richtung und zugleich zur Montage des Kunststoffkäfigs in der gleichen radialen Richtung ausgebildet ist. Die Kopplungsstruktur ermöglicht es somit, dass der Kunststoffkäfig in der radialen Richtung montiert wird, ein Herausfallen in der gleichen radialen Richtung jedoch verhindert wird.

Erfindungsgemäß weist die Kopplungsstruktur mindestens eine, vorzugsweise einige, Kopplungseinrichtungen auf, wobei die Kopplungseinrichtungen jeweils ein Halteorgan umfassen, welches an der Lagerteilschale festgelegt ist. Das Halteorgan kann insbesondere stoffschlüssig oder formschlüssig an der Lagerteilschale befestigt sein.

Erfindungsgemäß ist das Halteorgan durch einen Umformvorgang, insbesondere eine Verstemmung, aus einem oder dem Seitenbord der Lagerteilschale ausgeformt worden. Ferner umfassen die Kopplungseinrichtungen jeweils einen Führungsbahnabschnitt für das Halteorgan, wobei der Führungsbahnabschnitt an dem Kunststoffkäfig angeordnet ist. Der Führungsbahnabschnitt führt das Halteorgan und damit den Kunststoffkäfig in Umlaufrichtung und sichert das Halteorgan und damit den Kunststoffkäfig zumindest in dem Teilbereich des Schwenkwinkels in radialer Richtung formschlüssig. Der Führungsbahnabschnitt kann als Teil einer Führungskante oder von einem Führungskanal ausgebildet sein.

Erfindungsgemäß weist die Kopplungseinrichtung eine Sicherungseinrichtung auf, wobei die Sicherungseinrichtung ausgebildet ist, ein Einführen des Halteorgans in den Führungsbahn zu erlauben, ein Herausführen des Halteorgans aus der Führungsbahn jedoch zu verhindern. Insbesondere ist die Sicherungseinrichtung als eine Einbahnstraßensicherung oder als eine unidirektionale Sicherung ausgebildet. In diesem Fall definiert der Montagekanal bzw. dessen Breite keinen Ausgang, so dass

Erfindungsgemäß ist die Sicherungseinrichtung als eine Federeinrichtung ausgebildet sein, welche z.B. als ein elastischer Sicherungssteg ausgebildet ist, der sich quer zu dem Montagekanal erstreckt und welcher bei der Montage des Halteorgans elastisch verformt werden kann, nachfolgend in seine ursprüngliche Position und/oder Form zurückkehrt und eine Demontage des Halteorgans verhindert. Alternativ hierzu kann die Sicherungseinrichtung als eine oder mehrere Stegenden ausgebildet sein, welche bei der Montage des Halteorgans elastisch ausfedern und nach der Rückkehr in die Ausgangsposition eine Demontage verhindern.

Bei einer möglichen Weiterbildung der Erfindung weist die Kopplungseinrichtung einen Montagekanal auf, wobei der Montagekanal in dem Führungsbahnabschnitt mündet und wobei der Montagekanal zur Führung des Halteorgans bei der Montage in radialer Richtung ausgebildet ist. Das Halteorgan wird somit über den Montagekanal in den Führungsbahnabschnitt geschoben. Dabei kann vorgesehen sein, dass das Halteorgan aus der Kopplungseinrichtung über den Montagekanal wieder herausgeführt werden kann. In diesem Fall definiert der Montagekanal beziehungsweise dessen Breite in Umlaufrichtung einen möglichen Ausgang für das Halteorgan, so dass für diese Breite zumindest für die Kopplungseinrichtung kein Formschluss in radialer Richtung gegeben ist.

Bei einer möglichen Ausgestaltung der Erfindung weist die Kopplungsstruktur mehrere, insbesondere mindestens oder genau zwei, auf den axialen Seiten der Lagerteilschale verteilte Kopplungseinrichtungen auf, wobei die Kopplungseinrichtungen paarweise axial gegenüberliegen. In der kleinsten Realisierung weist die Kopplungsstruktur somit zwei Kopplungseinrichtungen auf, die sich in der gleichen axialen Lage in Umlaufrichtung befinden. Es können jedoch auch mehrere derartige Paare vorgesehen sein. In dieser Ausgestaltung ist die Kopplungsstruktur als ein Bajonettverschluss ausgebildet, wobei der Käfig durch ein einfaches Eindrücken in radialer Richtung in dem Laufbahnträger montiert werden kann. Diese Ausgestaltung ermöglicht eine sehr leichte Montage, hat jedoch den Nachteil, dass für den Fall, dass keine Sicherungseinrichtungen vorgesehen ist, der Käfig in der Montageposition in Bezug auf die Umlaufrichtung wieder demontiert werden kann. Für den Fall, dass eine Sicherungseinrichtung vorgesehen ist, ist auch in der Montageposition eine radiale Entnahme des Käfigs formschlüssig verhindert.

Bei einer alternativen Ausgestaltung der Erfindung sind die auf die axialen Seiten der Lagerteilschale verteilten Kopplungseinrichtungen in Umlaufrichtung paarweise zueinander verschoben, sodass bei der Montage zunächst der Käfig bei den Kopplungseinrichtungen einer axialen Seite eingeführt werden muss, nachfolgend in Umlaufrichtung verschoben werden muss, sodass die Halteorgane der anderen axialen Seite deckungsgleich zu dem Montagekanal der zugeordneten Kopplungseinrichtungen sind und nachfolgend montiert werden können. Diese alternative Ausgestaltung hat den Vorteil, dass der Käfig über den gesamten Schwenkwinkel formschlüssig in Bezug auf die radiale Richtung in der Lagerteilschale gesichert ist.

Bei einer bevorzugten Ausgestaltung der Erfindung ist die Segmentlageranordnung als eine Schwenkhebelanordnung, insbesondere mit einem Zugspannhebel für eine Bremse oder für eine Stabilisierungsstange einer hydraulischen Einheit ausgebildet. Die Schwenkhebelanordnung umfasst einen Schwenkhebel, wobei der Schwenkhebel über den rollengefüllten Käfig gelagert ist. Besonders bevorzugt ist die Lagerteilschale in einer Umgebungskonstruktion stationär angeordnet und der Schwenkhebel ist über den rollengefüllten Käfig relativ zu der Umgebungskonstruktion schwenkbar gelagert.

Weitere Merkmale, Vorteile und Wirkungen der Erfindung ergeben sich aus der Beschreibung bevorzugter Ausführungsbeispiele der Erfindung sowie den beigefügten Figuren. Dabei zeigen:
Figur 1 eine Segmentlageranordnung mit einem Laufbahnträger und einem Kunststoffkäfig in dreidimensionaler Darstellung mit Kopplungseinrichtungen als ein Ausführungsbeispiel der Erfindung;
Figur 2 eine erste mögliche Variante zur Anordnung der Kopplungseinrichtungen;
Figur 3 eine erste Variante zur Realisierung der Kopplungseinrichtungen;
Figur 4 eine zweite Variante zur Realisierung der Kopplungseinrichtungen;
Figur 5 die Segmentlageranordnung in der Figur 1 in einer alternativen Ausgestaltung, nicht Teil der Erfindung, mit Zusatzhalteorganen.

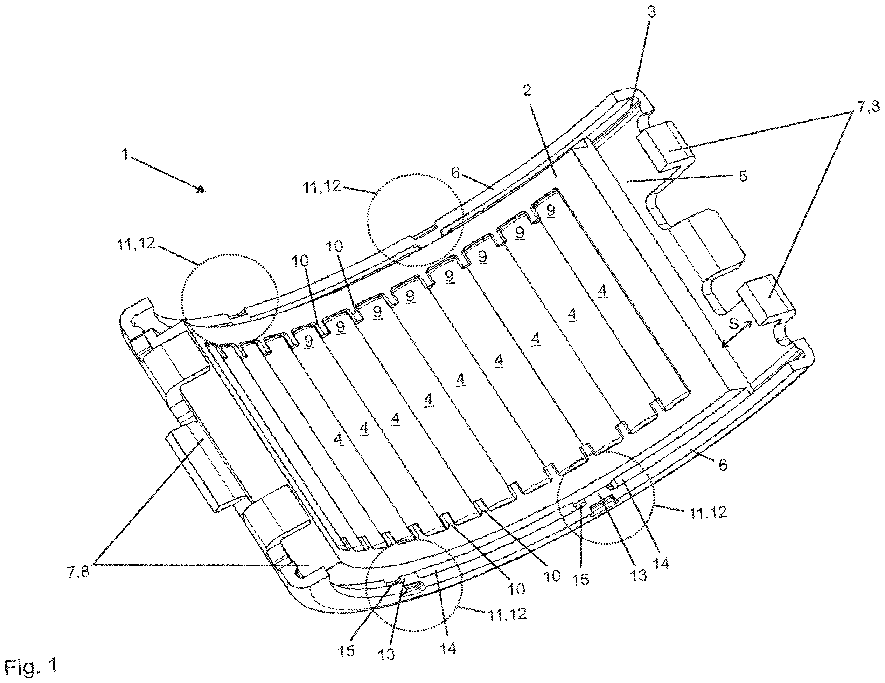

Die Figur 1 zeigt in einer schematischen dreidimensionalen Darstellung eine Segmentlageranordnung 1 als ein Ausführungsbeispiel der Erfindung. Die Segmentlageranordnung 1 ist als eine Radiallagerung ausgebildet. Sie erstreckt sich über weniger als 360 Grad und ist als Segmentlagerung bei diesem Beispiel auf einen Winkelbereich um eine Hauptachse der Segmentlageranordnung 1 von weniger als 180 Grad beschränkt. Insbesondere ist die Segmentlageranordnung 1 ausgebildet, zwei Lagerpartner zueinander um die Hauptachse zu verschwenken.

Die Segmentlageranordnung 1 weist einen Kunststoffkäfig 2 sowie eine Lagerteilschale 3 auf. In dem Kunststoffkäfig 2 ist eine Mehrzahl von als Nadelrollen ausgebildeten Rollen 4 angeordnet. Der rollengefüllte Kunststoffkäfig 2 kann in der Lagerteilschale 3 in Umlaufrichtung um die Hauptachse um einen Schwenkwinkel verschwenkt werden, indem die Rollen 4 auf einer Laufbahn 5 der Lagerteilschale 3 abwälzen und der Kunststoffkäfig 2 um einen Schwenkweg S in der Lagerteilschale 3 verfährt. Insbesondere bildet die Laufbahn 5 eine gerade Zylindermantelfläche, deren Mittelachse auf der Hauptachse liegt.

Die Lagerteilschale 3 ist in diesem Beispiel als eine Lagerhalbschale ausgebildet und als ein Metallbauteil, insbesondere als ein Metallumformteil realisiert. Die Lagerteilschale 3 weist an den axialen Seiten jeweils ein Seitenbord 6 auf, welches den Kunststoffkäfig 2 in axialer Richtung führt und zugleich gegen ein Herausfallen sichert. An den freien Enden der Lagerteilschale 3 in Umlaufrichtung sind Endanschlagseinrichtungen 7 in Form von radial nach innen gebogenen Endanschlägen 8 in Form von Laschenabschnitten ausgebildet, welche den Schwenkweg S und damit den Schwenkwinkel in Umlaufrichtung beidseitig begrenzen, sodass der Kunststoffkäfig 2 in Umlaufrichtung um die Hauptachse formschlüssig gesichert ist.

Erfindungsgemäß ist der Kunststoffkäfig 2 ausgebildet, die Rollen 4 unverlierbar zu halten. Hierzu weist der Kunststoffkäfig 2 Einzelaufnahmen 9 auf, in denen jeweils eine Rolle 4 angeordnet ist. Die Einzelaufnahmen 9 sind in radialer Richtung nach innen zu der Hauptachse durch Stegstummel 10 begrenzt, welche sich in axialer Richtung nur über einen Teilabschnitt der Rollen 4 erstrecken. Der Kunststoffkäfig 2 hält die Rollen 4 auch ohne die Lagerteilschale 3 unverlierbar, wobei auf der radialen Außenseite (nicht dargestellt) weitere Stegstummel angeordnet sind, sodass die Rollen in radialer Richtung nach innen durch die Stegstummel 10 formschlüssig gegen ein Herausfallen gesichert sind und in der Richtung radial nach außen durch die nicht dargestellten Stegstummel gegen ein Herausfallen in radialer Richtung nach außen gesichert sind. Die Stegstummel 10 haben den Vorteil, dass die Rollen 4 in dem Kunststoffkäfig 2 durch ein elastisches Verformen der Stegstummel 10 eingedrückt und dadurch eingelegt werden können. Bei alternativen Ausführungsformen kann der Kunststoffkäfig 2 nicht wie dargestellt einteilig, insbesondere einstückig, ausgebildet sein, sondern z.B. aus zwei Teilschalen bestehen, wobei eine innere und eine äußere Teilschale miteinander verbunden werden können. Bei dieser Ausführungsform werden die Rollen 4 zunächst in eine der Teilschalen eingelegt und dann durch Aufsetzen der anderen Teilschale gesichert. Die beiden Teilschalen können formschlüssig, kraftschlüssig und/oder stoffschlüssig miteinander verbunden werden. Die Einzelaufnahmen 9 werden bei dieser Ausführungsform durch das Zusammenspiel der beiden Teilschalen realisiert.

Wie bereits erläutert, ist der Kunststoffkäfig 2 in der Lagerteilschale 34 in Bezug auf die Umlaufrichtung durch die Endanschlageinrichtungen 7 und in axialer Richtung durch die Seitenborde 6 formschlüssig gegen ein Herausfallen oder Herausfahren gesichert. Für eine Sicherung gegen ein Herausfallen in radialer Richtung in Bezug auf die Hauptachse weist die Segmentlageranordnung 1 eine Kopplungsstruktur 11 auf, die in diesem Beispiel durch vier Kopplungseinrichtungen 12 gebildet ist. Die Kopplungsstruktur 11 ist funktional betrachtet ausgebildet, den Kunststoffkäfig 2 über einen Großteil des Schwenkwegs S und/oder des Schwenkwinkels formschlüssig in radialer Richtung in der Lagerteilschale 3 gegen ein Herausfallen oder ein Herausnehmen zu sichern. Dagegen ist die Kopplungsstruktur 11 jedoch auch so ausgebildet, dass ein Einsetzen des Kunststoffkäfigs 2 in der gleichen radialen Richtung insbesondere bei einer Einsetzposition des Kunststoffkäfigs 2 möglich ist.

Die Kopplungseinrichtungen 12 werden durch jeweils ein Halteorgan 13 sowie Führungsbahnabschnitten 14 gebildet. Die Halteorgane 13 sind fest an der Lagerteilschale 3, die Führungsbahnabschnitte 14 sind fest an dem Kunststoffkäfig 2 angeordnet. Die Führungsbahnabschnitte 14 bilden eine Zwangsführung für die Halteorgane 13, sodass der Kunststoffkäfig 2 in Umlaufrichtung entlang des Schwenkwegs S verschwenkt werden kann, jedoch formschlüssig gegen ein Herausfallen in radialer Richtung gesichert ist.

Erfindungsgemäß sind die Halteorgane 13 als Verstemmungen in den Seitenborden 6 ausgebildet, sodass die Halteorgane 13 in axialer Richtung aus den Seitenborden 6 hervorstehen und dem Kunststoffkäfig 2 zugewandt sind. Die Führungsbahnabschnitte 14 sind als Oberseite einer Führungskante ausgebildet, welche sich in Umlaufrichtung entlang des Kunststoffkäfigs 2 erstreckt. Im Betrieb fährt das Halteorgan 13, insbesondere die Verstemmung auf dem Führungsbahnabschnitt 14 und ist dadurch formschlüssig in radialer Richtung gesichert.

Zum Einlegen des Kunststoffkäfigs 2 weisen die Kopplungseinrichtungen 12 einen Montagekanal 15 auf, welcher in dieser Ausbildungsform als ein freier oder unterbrochener Bereich entlang des Führungsbahnabschnitts 14 ausgebildet ist und in radialer Richtung verläuft. Bei der Montage des Kunststoffkäfigs 2 werden das Halteorgan 13 und der Montagekanal 15 in radialer Draufsicht deckungsgleich angeordnet, sodass das Halteorgan 13 durch den Montagekanal 15 hindurchfahren kann. Durch eine Schwenkbewegung in Umlaufrichtung um die Hauptachse kann dann das Halteorgan 13 in einen Bereich des Führungsbahnabschnitts 14 eingefahren werden, wo das Halteorgan 13 formschlüssig durch den Führungsbahnabschnitt gehalten ist.

Bei dem in der Figur 1 dargestellten System handelt es sich um ein so zu bezeichnendes falsches Bajonett, da in der Montageposition des Kunststoffkäfigs 2 alle Halteorgane 13 jeweils deckungsgleich mit den zugeordneten Montagekanälen 15 sind. Somit kann der Kunststoffkäfig 2 in der Montageposition eingelegt und radial auf die Lagerteilschale 3 aufgedrückt werden. Durch eine Schwenkbewegung entlang des Schwenkwegs S bzw. um einen Schwenkwinkel werden alle Halteorgane 13 zugleich in die Führungsbahnabschnitte 14 eingefahren, sodass die radiale Sicherung gegeben ist. Somit ist bei dem Ausführungsbeispiel in der Figur 1 der Kunststoffkäfig 2 entlang eines Teilabschnitts des Schwenkwegs S und damit in einem Teilbereich des Schwenkwinkels, insbesondere entlang eines Großteils des Schwenkwegs S bzw. des Schwenkwinkels, formschlüssig in radialer Richtung gesichert.

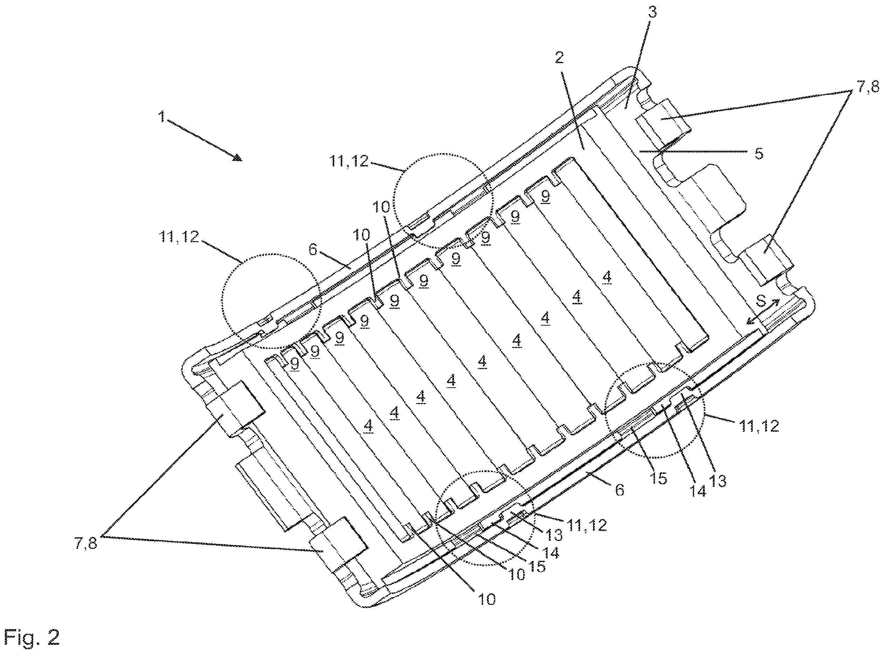

In der Figur 2 ist eine Abwandlung der Segmentlageranordnung 1 in der Figur 1 gezeigt, wobei die Kopplungseinrichtungen 12 auf den beiden Seitenborden 6 zueinander versetzt angeordnet sind. Somit stehen sich die Kopplungseinrichtungen 12 in einer axialen Draufsicht nicht mehr deckungsgleich gegenüber, sondern sind in Umlaufrichtung zueinander versetzt. Dieser Versatz hat den Effekt, dass der Kunststoffkäfig 2 seitenweise montiert werden muss. So müssen zunächst auf einer axialen Seite die Halteorgane 13 deckungsgleich zu den Montagekanälen 15 gebracht und der Kunststoffkäfig 2 auf dieser Seite eingeführt werden. Nachfolgend muss der Kunststoffkäfig 2 entlang des Schwenkwegs S soweit verschwenkt werden, bis die Halteorgane 13 auf der gegenüberliegenden axialen Seite wieder deckungsgleich mit den Montagekanälen 15 sind, sodass die zweite Seite montiert werden kann. Diese Konstellation kann auch als ein echtes Bajonett bezeichnet werden, da der Kunststoffkäfig 2 an jeder Position entlang des Schwenkwegs S unverlierbar in radialer Richtung formschlüssig gesichert ist.

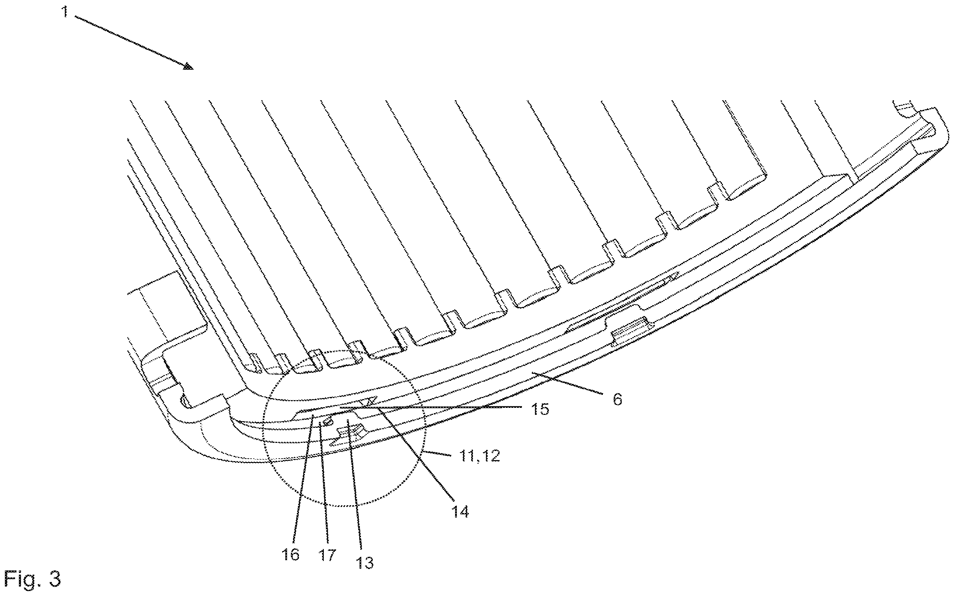

In der Figur 3 ist eine Alternative der Kopplungseinrichtungen 12 gezeigt, welche sowohl in dem falschen Bajonett gemäß der Figur 1 als auch in dem echten Bajonett gemäß der Figur 2 eingesetzt werden können. Im Bereich des Montagekanals 15 sind die Führungsbahnabschnitte 14 durchgängig ausgebildet, sind jedoch im Bereich eines Fensterabschnitts 16 des Kunststoffkäfigs 2 angeordnet, sodass diese in axialer Richtung einfedern können. Insbesondere bilden die Führungsbahnabschnitte 14 und der Fensterabschnitt 16 zusammen eine Federeinrichtung 17. Bei der Montage wird der Kunststoffkäfig 2 gegen den Widerstand der Federeinrichtung 17 eingedrückt, wobei das Halteorgan 13 in dem montierten Zustand dann über den gesamten Schwenkweg S und somit über den gesamten Schwenkwinkel formschlüssig in radialer Richtung gesichert ist. Damit ist auch der Kunststoffkäfig 2 über den vollständigen Schwenkweg S bzw. Schwenkwinkel formschlüssig gesichert.

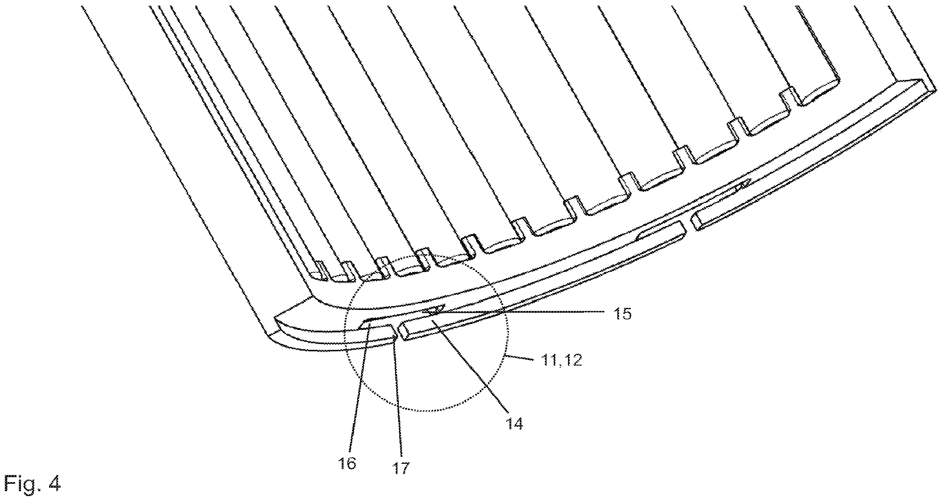

In der Figur 4 ist eine alternative Ausgestaltung der Federeinrichtung 17 - diesmal ohne die Lagerschale 3 - dargestellt. Bei dieser Ausgestaltung weist die Federeinrichtung 17 zwar ebenfalls den Fensterabschnitt 16 auf, der Führungsbahnabschnitt 14 ist jedoch an einer Stelle unterbrochen, wobei die Unterbrechungsstelle in Umlaufrichtung schmaler ausgebildet ist, als die Breite des Halteorgans 13. In dieser Ausgestaltung kann die Federeinrichtung 17 in radialer und axialer Richtung ausfedern, wobei das Halteorgan 13 durch die Federeinrichtung 17 durchgeschnappt wird. Nach dem Durchschnappen sind das Halteorgan 13 und damit der Kunststoffkäfig 2 formschlüssig in radialer Richtung gesichert.

Statt der Ausbildung der Halteorgane 13 als Verstemmungen ist es auch möglich, dass die Halteorgane 13 angeklebt, als Kunststoff angespritzt oder in anderer Weise aufgesetzt werden.

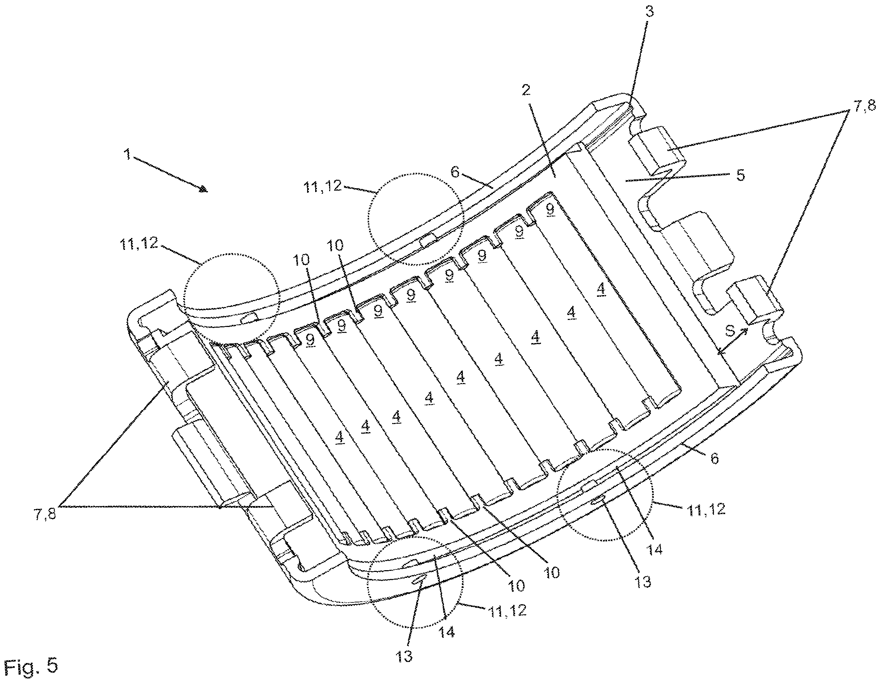

In der Figur 5 ist eine weitere Ausführungsalternative gezeigt, nicht Teil der Erfindung, wobei die Führungsbahnabschnitte 14 in Umlaufrichtung durchgängig ausgebildet sind und keine Federeinrichtungen aufweisen. In dieser Ausgestaltung sind jedoch die Halteorgane 13 einsetzbar ausgebildet, wobei in einem ersten Montageschritt der Kunststoffkäfig 2 in die Lagerteilschale 3 eingesetzt wird und in einem zweiten Schritt die Halteorgane 13 durch Öffnungen in den Seitenborden 6 eingeschoben werden.

### Bezugszeichenliste

- 1: Segmentlageranordnung
- 2: Kunststoffkäfig
- 3: Lagerteilschale
- 4: Rollen
- 5: Laufbahn
- 6: Seitenbord
- 7: Endanschlagseinrichtung
- 8: Endanschlag
- 9: Einzelaufnahme
- 10: Stegstummel
- 11: Kopplungsstruktur
- 12: Kopplungseinrichtung
- 13: Halteorgan
- 14: Führungsbahnabschnitt
- 15: Montagekanal
- 16: Fensterabschnitt
- 17: Federeinrichtung
- S: Schwenkweg

## Patentansprüche

1. Segmentlageranordnung (1)
mit einem Käfig (2),
mit einer Mehrzahl von Rollen (4), wobei die Rollen (4) in dem Käfig (2) angeordnet sind,
mit einer Lagerteilschale (3) als Laufbahnträger für die Rollen (4), wobei der Käfig (2) mit den Rollen (4) auf der Lagerteilschale (3) in Bezug auf eine Hauptachse in Umlaufrichtung um einen Schwenkwinkel schwenkbar angeordnet ist,
die Rollen (4) in dem Käfig (2) gegen ein radiales Herausfallen in Richtung der Hauptachse an dem Käfig (2) formschlüssig gesichert sind, **dadurch gekennzeichnet, dass** der Käfig (2) zumindest in einem Teilbereich des Schwenkwinkels gegen ein radiales Herausfallen in Richtung der Hauptachse an der Lageteilschale (3) formschlüssig durch Halteorgane (13) gesichert ist,
wobei die Halteorgane (13) als Verstemmungen in den Seitenborden (6) der Lagerteilschale (3) ausgebildet sind, wobei
- eine Kopplungsstruktur (11) zur Sicherung des Käfigs (2) gegen ein Herausfallen aus der Lagerteilschale (3) in radialer Richtung und zugleich zur Montage des Käfigs (2) in radialer Richtung ausgebildet ist, wobei
- die Kopplungsstruktur (11) mindestens eine Kopplungseinrichtung (12) aufweist, wobei die Kopplungseinrichtung (12) das Halteorgan (13) aufweist, wobei das Halteorgan (13) an der Lagerteilschale (3) angeordnet ist, sowie einen Führungsbahnabschnitt (14) für das Halteorgan (13) aufweist, wobei
- der Führungsbahnabschnitt (14) an dem Käfig (2) angeordnet ist und das Halteorgan (13) in Umlaufrichtung führt und zumindest in dem Teilbereich des Schwenkwinkels in radialer Richtung formschlüssig sichert, wobei
- die Kopplungseinrichtung (12) eine Sicherungseinrichtung (17) aufweist und
- die Sicherungseinrichtung als eine Federeinrichtung (17) ausgebildet ist, wobei
- der als Kunststoffkäfig ausgebildete Käfig (2) Einzelaufnahmen (9) aufweist, in denen jeweils eine Rolle (4) angeordnet ist, wobei
- die Einzelaufnahmen (9) in radialer Richtung nach innen zu der Hauptachse durch Stegstummel (10) begrenzt sind, welche sich in axialer Richtung nur über einen Teilabschnitt der Rollen (4) erstrecken, sodass die Rollen (4) in radialer Richtung nach innen durch die Stegstummel (10) formschlüssig gegen ein Herausfallen gesichert sind und
- der Kunststoffkäfig (2) die Rollen (4) auch ohne die Lagerteilschale (3) unverlierbar hält, wobei auf der radialen Außenseite weitere Stegstummel angeordnet sind, sodass die Rollen (4) in der Richtung radial nach außen durch die weiteren Stegstummel gegen ein Herausfallen in radialer Richtung nach außen gesichert sind.

2. Segmentlageranordnung (1) nach Anspruch 1, **dadurch gekennzeichnet, dass** der Käfig (2) über den vollständigen Schwenkwinkel unverlierbar in der Lagerteilschale (3) angeordnet ist.

3. Segmentlageranordnung (1) nach Anspruch 1, **dadurch gekennzeichnet, dass** die Kopplungseinrichtung (12) einen Montagekanal (15) aufweist, wobei der Montagekanal (15) in dem Führungsbahnabschnitt (14) mündet und wobei der Montagekanal (15) zur Führung des Halteorgans (13) bei der Montage in radialer Richtung ausgebildet ist.

4. Segmentlageranordnung (1) nach einem der Ansprüche 1 bis 3, **dadurch gekennzeichnet, dass** die Kopplungsstruktur (11) mehrere auf zwei axiale Seiten der Lagerteilschale (3) verteilte Kopplungseinrichtungen (12) aufweist, wobei die Kopplungseinrichtungen (12) paarweise axial gegenüberliegen.

5. Segmentlageranordnung (1) nach einem der Ansprüche 1 bis 3, **dadurch gekennzeichnet, dass** die Kopplungsstruktur (11) mehrere auf zwei axiale Seiten der Lagerteilschale (3) verteilte Kopplungseinrichtungen (12) aufweist, wobei die gegenüberliegenden Kopplungseinrichtungen (12) in Umlaufrichtung zueinander verschoben sind.

## Claims

1. A segment bearing arrangement (1)
with a cage (2),
with a plurality of rollers (4), wherein the rollers (4) are arranged in the cage (2),
with a partial bearing shell (3) as a track carrier for the rollers (4), wherein the cage (2) with the rollers (4) is arranged on the partial bearing shell (3) so as to be pivotable about a pivot angle relative to a main axis in the circumferential direction,
the rollers (4) in the cage (2) are secured to the cage (2) in a form-fitting manner against falling out radially in the direction of the main axis, **characterized in that** the cage (2) is secured to the partial bearing shell (3) in a form-fitting manner against falling out radially in the direction the main axis, at least in a sub-range of the pivot angle, by means of holding elements (13), wherein the holding elements (13) are designed as caulkings in the side rims (6) of the partial bearing shell (3), wherein
- a coupling structure (11) is designed for securing the cage (2) against falling out of the partial bearing shell (3) in the radial direction and at the same time for mounting the cage (2) in the radial direction, wherein
- the coupling structure (11) comprises at least one coupling device (12), wherein the coupling device (12) comprises the holding element (13), wherein the holding element (13) is arranged on the partial bearing shell (3), and comprises a guide track section (14) for the holding element (13), wherein
- the guide track section (14) is arranged on the cage (2) and guides the holding element (13) in the circumferential direction and secures it in a form-fitting manner in the radial direction at least in a sub-range of the pivot angle, wherein
- the coupling device (12) comprises a securing device (17) and
- the securing device is designed as a spring device (17), wherein
- the cage (2) designed as a plastic cage comprises individual receptacles (9) in each of which a roller (4) is arranged, wherein
- the individual receptacles (9) are inwardly delimited in the radial direction to the main axis by web stubs (10) which extend in the axial direction only over a portion of the rollers (4), so that the rollers (4) are secured in a form-fitting manner against falling out in the radially inward direction, by means of the web stubs (10) and
- the plastic cage (2) holds the rollers (4) captive even without the partial bearing shell (3), wherein further web stubs are arranged on the radially outer side, so that the rollers (4) are secured in the radially outward direction against falling out in the radially outward direction by means of the further web stubs.

2. The segment bearing arrangement (1) according to Claim 1, **characterized in that** the cage (2) is captively arranged in the partial bearing shell (3) over the entire pivot angle.

3. The segment bearing arrangement (1) according to Claim 1, **characterized in that** the coupling device (12) comprises an assembly channel (15), wherein the assembly channel (15) opens into the guide track section (14) and wherein the assembly channel (15) is designed for guiding the holding element (13) in the radial direction during assembly.

4. The segment bearing arrangement (1) according to one of Claims 1 to 3, **characterized in that** the coupling structure (11) comprises a plurality of coupling devices (12) distributed over two axial sides of the partial bearing shell (3), wherein the coupling devices (12) are arranged in axially opposing pairs.

5. The segment bearing arrangement (1) according to one of Claims 1 to 3, **characterized in that** the coupling structure (11) has a plurality of coupling devices (12) distributed over two axial sides of the partial bearing shell (3), wherein the opposing coupling devices (12) are offset relative to one another in the circumferential direction.

## Revendications

1. Ensemble palier segmenté (1)
comprenant une cage (2),
comprenant plusieurs rouleaux (4), les rouleaux (4) étant disposés dans la cage (2),
comprenant une coquille partielle de palier (3) servant de support de voie de déplacement pour les rouleaux (4), la cage (2) comprenant les rouleaux (4) étant disposée sur la coquille partielle de palier (3) de manière à pouvoir pivoter autour d'un angle de pivotement par rapport à un axe principal dans le sens de rotation,
les rouleaux (4) dans la cage (2) étant fixés par complémentarité de formes pour empêcher une chute radiale dans la direction de l'axe principal sur la cage (2), **caractérisé en ce que** la cage (2) est fixée par complémentarité de formes au moins dans une zone partielle de l'angle de pivotement sur la coquille partielle de palier (3) par des organes de maintien (13) pour empêcher une chute radiale dans la direction de l'axe principal,
dans lequel les organes de maintien (13) sont conçus sous forme de matage dans les bords latéraux (6) de la coquille partielle de palier (3), dans lequel
- une structure d'accouplement (11) est conçue pour fixer la cage (2) pour empêcher une chute hors de la coquille partielle de palier (3) dans la direction radiale et en même temps pour monter la cage (2) dans la direction radiale, dans lequel
- la structure d'accouplement (11) présente au moins un dispositif d'accouplement (12), le dispositif d'accouplement (12) présentant l'organe de maintien (13), l'organe de maintien (13) étant disposé sur la coquille partielle de palier (3), ainsi qu'un segment de voie de guidage (14) pour l'organe de maintien (13), dans lequel
- le segment de voie de guidage (14) est disposé sur la cage (2) et guide l'organe de maintien (13) dans la direction de rotation et le retient par complémentarité de formes dans la direction radiale au moins dans la zone partielle de l'angle de pivotement, dans lequel
- le dispositif d'accouplement (12) présente un dispositif de fixation (17) et
- le dispositif de fixation est conçu sous la forme d'un dispositif à ressort (17), dans lequel
- la cage (2) conçue sous forme de cage en matière plastique présente des logements individuels (9) dans chacun desquels est disposé un rouleau (4), dans lequel
- les logements individuels (9) sont limités dans la direction radiale vers l'intérieur par rapport à l'axe principal par des talons de liaison (10) qui s'étendent dans la direction axiale uniquement sur un segment partiel des rouleaux (4) de sorte que les rouleaux (4) soient fixés pour empêcher une chute dans la direction radiale vers l'intérieur à travers les talons de liaison (10) par complémentarité de formes et
- la cage en matière plastique (2) maintient les rouleaux (4) captifs même sans la coquille partielle de palier (3), d'autres talons de liaison étant disposés sur la face externe radiale de sorte que les rouleaux (4) soient fixés dans la direction radiale vers l'extérieur par les autres talons de liaison pour empêcher une chute dans la direction radiale vers l'extérieur.

2. Ensemble palier segmenté (1) selon la revendication 1, **caractérisé en ce que** la cage (2) est agencée de manière captive dans la coquille partielle de palier (3) sur l'ensemble de l'angle de pivotement.

3. Ensemble palier segmenté (1) selon la revendication 1, **caractérisé en ce que** le dispositif d'accouplement (12) présente un canal de montage (15), le canal de montage (15) débouchant dans le segment de voie de guidage (14) et le canal de montage (15) étant conçu pour guider l'organe de maintien (13) dans la direction radiale lors du montage.

4. Ensemble palier segmenté (1) selon l'une quelconque des revendications 1 à 3, **caractérisé en ce que** la structure d'accouplement (11) présente plusieurs dispositifs d'accouplement (12) répartis sur deux côtés axiaux de la coquille partielle de palier (3), les dispositifs d'accouplement (12) étant disposés face à face en paires axiales.

5. Ensemble palier segmenté (1) selon l'une quelconque des revendications 1 à 3, **caractérisé en ce que** la structure d'accouplement (11) présente plusieurs dispositifs d'accouplement (12) répartis sur deux côtés axiaux de la coquille partielle de palier (3), les dispositifs d'accouplement (12) mutuellement opposés étant décalés l'un par rapport à l'autre dans la direction de rotation.
